# EUROPÄISCHE PATENTANMELDUNG

(11) **EP 3 666 816 A1**
(43) Veröffentlichungstag der Anmeldung: **17.06.2020**
(21) Anmeldenummer: 18212169.9
(22) Anmeldetag: 13.12.2018
(51) Int. Cl.: C08J 5/00, C08J 5/18

(54) **VERWENDUNG EINER KLEBERFREIEN VERBUNDFOLIE ZUR VERPACKUNG VON AMINHALTIGEN MASSEN**

(71) Anmelder: Hilti Aktiengesellschaft, 9494 Schaan (LI)
(72) Erfinder: Behrens, Nicole, 81245 München (DE); Boxler, Frank, 86899 Landsberg (DE)
(74) Vertreter: Hilti Aktiengesellschaft Corporate Intellectual Property

(57) **Zusammenfassung**

Die Erfindung betrifft die Verwendung einer klebfreien Verbundfolie zur Verpackung von aminhaltigen Massen, wobei der Schlauchbeutel aus einer mehrlagigen Verbundfolie gebildet ist, die wenigstens eine Lage aus Polyamid 6 aufweist und die im Drei-Blasen-Verfahren hergestellt ist.

## Beschreibung

Die Erfindung betrifft eine kleberfreie Verbundfolie zur Verpackung von aminhaltigen Massen, insbesondere pastösen Massen für Klebstoffe, Dichtstoffe und Kunstmörtel.

Bekannt sind aus mehreren Lagen aufgebaute Verpackungsfolien, die miteinander durch einen Polyurethankleber verbunden sind. Der Polyurethankleber kann durch organische Amine angegriffen und abgebaut werden. Dadurch können sich die mechanischen Eigenschaften des Folienverbundes in unerwünschter Weise ändern, bis hin zu einer Auflösung des Verbundes.

Die Verwendung dicker Monolagen eines als Barriere gegen Amine wirkenden Kunststoffs ist nicht möglich, da solche Monolagen nicht siegelfähig sind. Koextrudierte oder extrusionskaschierte Folien als Verpackung für Kunstmörtel lassen eine Steuerung der mechanischen Eigenschaften der Verpackung nur in engen Grenzen zu. Speziell das Erreichen eines niedrigen Weiterreißwiderstands in CD (quer zur Laufrichtung der Folie in der Verarbeitung) kann mit diesen Folien nicht erreicht werden, da dieser primär durch Verstrecken in CD verursacht wird.

Die Herstellung von biaxial gereckten Verbundfolien mit Hilfe des sogenannten Drei-Blasen-Verfahrens (Triple Bubble Process) ist grundsätzlich bekannt. Im Drei-Blasen-Verfahren wird, im Unterschied zu vielen anderen Verfahren, die Folie gleichzeitig in MD (Laufrichtung der Folie in der Verarbeitung) und CD verstreckt. In der WO 2008/037441 A1 werden eine Vielzahl von mehrlagigen Verbundfolien (auch als mehrlagige Verbundfolien oder Mehrschichtfolien bezeichnet) mit Kernschichten aus Polyamiden, Polyester, Polyolefinen und deren Copolymere beschrieben, die mittels des Drei-Blasen-Verfahrens hergestellt sind, und die einen maximalen Schrumpfungsgrad von 2 % aufweisen. Diese Folien werden zur Verpackung von Lebensmitteln wie Salzgebäck und Chips, Hartkäse, Getreideprodukten sowie Pulvermischungen für Getränke, Backwaren, Kaffee und Zuckerkonfekt verwendet. Beschrieben ist auch die Verwendung der Folien zur Verpackung von Feuchttüchern, Kosmetiktüchern und Reinigungstüchern.

Die DE 100 19 072 A1 beschreibt einen Schlauchbeutel aus Verbundfolie zur Aufnahme von Mörtelmassen, mit einer die Mörtelmasse umschließenden Innenlage und einer die Innenlage umschließenden Aussenlage, bei dem die Innenlage eine Polyethylenfolie oder eine Polypropylenfolie sowie eine Polyamidfolie aufweist, und die Außenlage aus einem für Epoxidhärter nicht durchdringbaren Material besteht. Die Außenlage ist aus einer gereckten Kunststofffolie aus Polypropylen, Polyethylenterephthalat, Polyethylennaphthenat oder Polyamid und einer Metallschicht gebildet. Zur Bildung des Schlauchbeutels sind Randbereiche der Verbundfolie durch eine Naht miteinander verbunden.

Es besteht weiter Bedarf an Verpackungen für härtbare Massen auf der Grundlage von Reaktivharzen, wie Kunstmörtel, Klebstoffe und Dichtstoffe, die gegen aggressive Chemikalien wie Amine beständig sind und deren mechanische Eigenschaften flexibel gesteuert werden können.

Diese Aufgabe wird erfindungsgemäß durch die Verwendung einer klebfreien Verbundfolie gemäß Anspruch 1 gelöst.

Vorteilhafte Ausführungsformen sind in den Unteransprüchen angegeben, die wahlweise miteinander kombiniert werden können.

Erfindungsgemäß wird eine klebfreie Verbundfolie zur Verpackung aminhaltiger Massen verwendet, wobei der Schlauchbeutel aus einer Verbundfolie gebildet ist, die wenigstens eine Lage aus Polyamid 6 aufweist, und die im Drei-Blasen-Verfahren hergestellt ist.

Überraschenderweise wurde festgestellt, dass Polyamid 6 eine hervorragende Barrierewirkung gegen die üblicherweise als Härter oder Beschleuniger für Reaktivharze auf der Grundlage von Epoxiden, Vinylverbindungen oder Isocyanaten verwendeten Amine aufweist. Lagen aus beispielsweise Polyamid 6.6 haben sich dagegen als weitgehend wirkungslos erwiesen.

Die Verwendung des Drei-Blasen-Verfahrens zur Herstellung der Verbundfolien gestattet zudem die Steuerung der mechanischen Eigenschaften der Folie, insbesondere des Schrumpfverhaltens und des Weiterreißwiderstands, in weiten Grenzen. Damit lassen sich Verbundfolien bereitstellen, die alle Eigenschaften aufweisen, welche zur erfindungsgemäßen und sicheren Verpackung von härtbaren Massen mit Aminkomponenten benötigt werden.

Die aminhaltigen Massen sind vorzugsweise aus der Gruppe der Klebstoffe, Dichtstoffe und Kunstmörtel, vorzugsweise Injektionsmörtel zur chemischen Befestigung von Verankerungsmitteln in Bohrlöchern, ausgewählt.

Die Massen können Einkomponentenmassen oder Mehrkomponentenmassen sein. Bei Einkomponentenmassen liegen alle Komponenten des Reaktivharzes als Mischung zusammen in der Verpackung vor. Bei Mehrkomponentenmassen werden die reaktiven Komponenten der Masse getrennt voneinander gelagert und erst am Einsatzort miteinander vermischt.

Die Massen werden unter anderem in sogenannten Schlauchbeuteln verpackt. Die Schlauchbeutel können aus dem in der Folienherstellung entstehenden Blasfolienschlauch direkt hergestellt werden, oder sind aus einer Flachfolie durch Verschweißen der Längsseite zugänglich. Diese Beutel werden üblicherweise mit einer Komponente der Masse gefüllt und anschließend beispielsweise durch Verschweißen oder Clippen an ihrem Einfüllende verschlossen. In diesem gefüllten Zustand werden die Schlauchbeutel zur Verarbeitung der Massen einem Auspressgerät zugeführt, welches die Schlauchbeutel beispielsweise durch Zusammenpressen in eine Mischvorrichtung oder eine Injektionsvorrichtung entleert.

Die in der oder den Komponenten der Masse enthaltenen Amine sind beispielsweise folgende: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1, 5-diaminopentan, 1,3-Diaminopentan, 2,2,4- oder 2,4,4-Trimethyl-1, 6-diaminohexan und Gemische davon (TMD), 3-Aminomethyl-3,5,5-trimethylcyclohexan (Isophorondiamin, IPDA), 1,3-Bis(aminomethyl)-cyclohexan (1,3-BAC), 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan (PACM), Bis(4-amino-3-methylcyclohexyl)methan (MACM), Bis-(4-Amino-3,5-dimethlylcyclohexyl)methan Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4, 7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), Diethylmethylbenzoldiamin (DETDA), 4,4'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0^{2,6}]decan (Isomerengemisch, tricyclischer primärer Amine; TCD-Diamin), 1,8-Diamino-p-menthan, N-Aminoethyl-piperazin (N-AEP), N-3-(Aminopropylpiperazin), Piperazin, 4-Methylcyclohexyl-diamin (mCDA).

Die in der oder den Komponenten der Masse enthaltenen Amine sind bevorzugt aus der aus Dieethylentriamin, Propylendiamin, 1,3-Diaminocyclohexan, Isophorondiamin, m-Xylylendiamin, tertiärem N,N-substituierten Anilin, tertiärem N,N-substituierten Toluidin und deren alkoxylierten Derivaten sowie Mischungen davon bestehenden Gruppe ausgewählt. Beispiele für die genannten Anilin- und Toluidinderivate sind N,N-Dimethylanilin, N,N-Diethylanilin, N-Ethyl-N-(hydroxyethyl)-anilin, N,N-Dimethyl-p-toluidin, N-Methyl-N-(hydroxyethyl)-p-toluidin, N,N-Diisopropyliden-p-toluidin, Di(hydroxyethyl)-p-toluidin, Di(hydroxyethyl)-m-toluidin und ethoxyliertes Di(hydroxyethyl)-p-toluidin.

Grundsätzlich können die Massen alle Amine enthalten, die im Stand der Technik als Härter für Epoxide und Isocyanate sowie als Beschleuniger für radikalisch härtbare Massen bekannt sind. Die meisten dieser Amine sind gesundheitsgefährdende Stoffe, so dass ein Entweichen der Komponente in die Umwelt schon aus diesem Grund verhindert werden muss. Außerdem beeinträchtigt das Austreten von Bestandteilen der Masse deren Gebrauchsfähigkeit.

Der für die Verpackung der aminhaltigen Massen verwendete Schlauchbeutel wird aus einer Folie gebildet, die eine Dicke von 40 bis 100 µm hat, bevorzugt eine Dicke von 60 bis 80 µm. Die Folie weist vorzugsweise eine Kernschicht auf, die aus einer Mittellage aus Ethylen-Vinylalkohol-Copolymer (EVOH) gebildet ist und die beidseitig von jeweils einer Lage aus Polyamid 6 (PA 6) umgeben ist. Das Ethylen-Vinylalkohol-Copolymer bildet eine Barriere gegen den Durchtritt von Gasen, insbesondere Sauerstoff. Die Lagen aus PA 6 sind erfindungsgemäß als Barriere gegen den Durchtritt von Aminkomponenten der Masse vorgesehen.

Die Dicke der Kernschicht beträgt vorzugsweise von etwa 10 bis 20 µm, bevorzugt 15 bis 18 µm. Die Lage aus EVOH kann eine Dicke von etwa 4 bis 8 µm aufweisen, vorzugsweise 5 bis 6 µm. Die Lagen aus PA 6 in der Kernschicht sind bevorzugt jeweils etwa 3 bis 6 µm dick, vorzugweise 5 bis 6 µm.

Bevorzugt ist die Kernschicht aus PA 6/EVOH/PA 6 wiederum beidseitig jeweils von einer weiteren Lage aus einem Polyolefin, vorzugweise Polyethylen, umgeben.

Geeignete Polyolefine sind vorzugsweise ausgewählt aus der Gruppe umfassend Ethylen-Homopolymere (Polyethylene, PE), vorzugsweise LDPE und HDPE, Propylen-Homopolymere (Polypropylene, PP), Butylen-Homopolymere (Polybutylene, PB) und Isobutylen-Homopolymere (Polyisobutylene, PIB) oder Mischungen aus wenigstens zwei der genannten Polymere. Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet. Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann.

Geeignete Olefin-Copolymere sind vorzugsweise Copolymere von Ethylen und/oder Propylen und wenigstens einem α-Olefin mit mindestens 4, vorzugsweise mit 4 bis 10, besonders bevorzugt mit 4 bis 8 Kohlenstoffatomen, ganz besonders bevorzugt Copolymere von Ethylen und/oder Propylen mit wenigstens einem α-Olefin ausgewählt aus der Gruppe bestehend aus Buten, Hexen und Octen. Der α-Olefin-Anteil im Olefin-Copolymeren beträgt vorzugsweise höchstens 25 Gew.- %, besonders bevorzugt höchstens 15 Gew.-%, jeweils bezogen auf das Gesamtgewicht des Olefin-Copolymeren.

Besonders geeignete Copolymere von Ethylen und wenigstens einem α-Olefin mit mindestens 4 Kohlenstoffatomen sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm³ aufweisen.

Besonders geeignete Copolymere von Propylen sind Copolymere von Propylen und wenigstens einem α-Olefin mit 2 bzw. 4 bis 6 Kohlenstoffatomen, besonders bevorzugt ausgewählt aus der Gruppe bestehend aus Propylen-Ethylen-Copolymere, Propylen-Butylen-Copolymere, Propylen-Isobutylen-Copolymere und Mischungen aus wenigstens zwei der genannten Copolymeren.

Bevorzugte Olefin-Homo-oder Copolymere sind Ethylen-Homo- und Copolymere und/oder Propylen-Homo- und Copolymere.

Besonders bevorzugt sind Ethylen-Homo- und/oder Copolymere, ganz besonders bevorzugt LDPE und/oder LLDPE, und insbesondere eine Mischung aus wenigstens einem Ethylen-Homopolymeren niederer Dichte (LDPE) und wenigstens einem linearen Polyethylen niederer Dichte (LLDPE).

Zur besseren Haftung der Polyolefinlagen auf der Kernschicht kann ein die Kernschicht mit den Polyolefinlagen verbindender Haftvermittler eingesetzt werden. Der Haftvermittler ist bevorzugt ein Oligomer oder Copolymer auf Basis von Maleinsäureanhydrid und Olefinen, wahlweise zusammen mit Acrylsäureester. Geeignete Haftvermittler sind kommerziell erhältlich, beispielsweise unter den Handelsnamen Lotader™ (von Arkema SA), Admer™ (von Mitsui Chemicals), Surlyn™, Bynel™ (beide von DuPont) und Plexar™ (von LyondellBasell Industries).

Die Dicke der Haftvermittlerschicht beträgt jeweils etwa 2 bis 4 µm, bevorzugt jeweils etwa 2 bis 3 µm.

Die Dicke der Polyolefinlagen kann gleich oder unterschiedlich sein. Vorzugsweise bildet eine der Polyolefinlagen eine Außenlage der Verbundfolie beziehungsweise die Innenlage des Schlauchbeutels. Diese Lage ist vorzugsweise von etwa 10 bis 30 µm dick, bevorzugt etwa 20 bis 25 µm. Die äußere Polyolefinlage lässt sich leicht mit üblichen Druckfarben bedrucken und ist außerdem zur Vakuumbeschichtung geeignet. Bildet diese Polyolefinlage die Innenlage des Schlauchbeutels steht sie im Kontakt mit dem Füllgut, also der aminhaltigen Komponente. Über diese Polyolefinlagen, also die Außen- und die Innenlage wird die Folie außerdem verschweißt. Sie bildet dementsprechend auch die Siegelschicht.

Die Dicke der in der Verbundfolie oder eines daraus hergestellten Schlauchbeutels angeordneten Polyolefinlage, beträgt bevorzugt etwa 4 bis 8 µm, vorzugweise 5 bis 6 µm.

In Nachbarschaft zur innenseitig angeordneten Lage aus Polyolefin, insbesondere Polyethylen, befindet sich bevorzugt eine weitere Lage aus Polyamid 6 (PA 6). Diese Lage umschließt die aminhaltigen Masse und stellt somit eine erste wirksame Barriere gegen den unerwünschten Durchtritt von organischen Aminen aus der Masse bereit.

Die Dicke der inneren Lage aus PA 6 liegt bevorzugt in einem Bereich von 10bis 30 µm, vorzugsweise 10 bis 15 µm.

Gemäß einer weiteren Ausführungsform ist die Verbundfolie auf wenigstens einer ihrer Oberflächen, vorzugsweise beidseitig, mit einer Metallbeschichtung, insbesondere einer Aluminiumbeschichtung, oder einer keramischen Beschichtung, bevorzugt Siliciumoxid SiOₓ oder Aluminiumoxid AlOₓ, versehen. Die Beschichtung kann durch die im Stand der Technik bekannten Aufdampfverfahren wie physikalische Abscheidung aus der Gasphase (PVD) aufgebracht werden.

Die Herstellung des Schlauchbeutels aus der oben beschriebenen Verbundfolie erfolgt erfindungsgemäß über eine Blasfolienextrusion unter Bildung von drei Blasen, die dementsprechend auch als Drei-Blasen-Verfahren oder, im englischen Sprachgebrauch, als "Triple-Bubble (3B) Process" bezeichnet wird.

Bei dem Drei-Blasen-Verfahren wird eine Polymermasse vorzugsweise als Mehrlagenfilm durch eine Ringdüse zu einem dicken Schlauch extrudiert, nach dem Austritt aus der Düse auf einen genauen Durchmesser kalibriert und nachfolgend sofort mit Wasser abgeschreckt.

Anschließend wird der Schlauch auf eine entsprechend ausgewählte Recktemperatur erwärmt und in einer weiteren Stufe unter Ausbildung einer zweiten Blase zwischen zwei Abzugswalzenpaaren zur Erweiterung des Blasendurchmessers erneut mit Luft oder einem anderen geeigneten Gas aufgeblasen und dabei in transversaler Richtung oder Querrichtung gereckt. Das Recken in longitudinaler Richtung oder Maschinenrichtung erfolgt über die Einstellung einer unterschiedlichen Drehzahl der die Blase in ihrer Längsrichtung begrenzenden Abzugswalzen. Der zu einer Blase expandierte Schlauch wird auf diese Weise mit einer im Vergleich zur Extrusionsgeschwindigkeit höheren Geschwindigkeit gefördert, so dass seine Orientierung in Querrichtung und in Maschinenrichtung erhalten bleibt.

Zur Entfernung der durch die biaxiale Orientierung eingebrachten und eingefrorenen Rückstellspannung wird der Schlauch zu einer dritten Blase aufgeweitet und im aufgeblasenen Zustand unter Einhaltung einer kontrollierten Temperatur und eines kontrollierten Blaseninnendrucks fixiert. Diese Wärmebehandlung der dritten Blase trägt neben dem Abbau von Eigenspannungen vor allem bei mehrschichtigen Filmen zur Flachlage bei, alles unter Beibehaltung der durch die biaxiale Orientierung des Polymerfilms erzielten hohen Stabilität und guten mechanischen Festigkeit.

Das Drei-Blasen-Verfahren ermöglicht die Herstellung von mehrlagigen, biaxial gereckten Verbundfolien mit einem niedrigen Schrumpfungsgrad von höchstens etwa 2 %, vorzugsweise höchstens 1 % bei 65°C, bestimmt als Maßänderung nach DIN 53377. Die auf diese Weise erhaltenen Verbundfolien sind thermisch stabil und schrumpfen in weiteren möglichen Verarbeitungsschritten wie Kaschieren, Bedrucken oder Bedampfen praktisch nicht.

Ein weiterer Vorteil der so hergestellten Verbundfolien liegt darin, dass mit dem Drei-Blasen-Verfahren coextrudierte Folien mit wesentlich geringeren Dicken der biaxial orientierten Lagen hergestellt werden können, was zu wesentlichen Materialeinsparungen und vorteilhaften mechanischen Eigenschaften führt.

Neben der Art und der Dicke der Monolagen der Verbundfolie kann insbesondere aufgrund der Anwendung des Drei-Blasen-Verfahrens die Durchstoßfestigkeit und der Weiterreißwiderstand der Verbundfolie in einer Weise gesteuert werden, die für die Anwendung der Verbundfolie als Verpackung für reaktive Massen wie Klebstoffe, Dichtmassen und Kunstmörtel von Vorteil ist.

Durch das Reckverhältnis, die Rohstoffe, die zur Herstellung der Monolagen verwendet werden, und die Dicke der Monolagen beeinflussen die Durchstoßfestigkeit und den Weiterreißwiderstand der Verbundfolie. Dem Fachmann ist bekannt, wie die nachfolgend beschriebenen Parameter der Verbundfolie über das Verfahren zu deren Herstellung gesteuert werden können.

Zur Messung der Durchstoßfestigkeit gemäß DIN EN 14477 wird die Verbundfolie mit einem Messfühler durchstoßen, der eine flache zylindrische Spitze mit einem Durchmesser von 0,8 µm aufweist. Die Messung erfolgt mit einer Prüfgeschwindigkeit im Bereich von 1 bis 100 mm/min. Die Durchstoßfestigkeit gibt die Kraft an, die beim ersten Anriss der Folie vom Messfühler in Durchstoßrichtung auf die Folie ausgeübt wird. Die so ermittelte Durchstoßfestigkeit der Verbundfolie, beträgt vorzugsweise bis 13 N bei einer Prüfgeschwindigkeit von 100 mm/min.

Eine hinreichend hohe Durchstoßfestigkeit gewährleistet, dass später der die reaktive Masse enthaltende Schlauchbeutel sicher gehandhabt werden kann. Allerdings soll die Durchstoßfestigkeit nicht über einem Wert von 13 N liegen, da sonst für das Auspressen der Masse aus dem Schlauchbeutel eine zu hohe Kraft aufgewendet werden muss.

Der Weiterreißwiderstand der Verbundfolie, gemessen nach DIN 53363 mit einer Prüfgeschwindigkeit von 100 mm/min, beträgt bevorzugt von 3,0 bis 10,0 N, vorzugsweise von 3,0 bis 8,0 N.

Der Weiterreißwiderstand bezeichnet die Kraft, welche die Verbundfolie nach einer Schnitt- oder Stichverletzung einem Weiterreißen entgegensetzt. Ein Weiterreißwiderstand von unter 10 N ist vorteilhaft, da in diesem Fall der einmal geöffnete Schlauchbeutel leicht aufreißt und die reaktive Masse schnell und vollständig ausgetragen werden kann. Die Untergrenze von ca. 3 N ergibt sich durch die Maschinengängigkeit. Bei kleineren Weiterreißwiderständen kommt es schnell zu Bahnabrissen bei der Verarbeitung.

Gegenstand der Erfindung ist daher auch ein Schlauchbeutel aus einer Verbundfolie, die durch das Drei-Blasen-Verfahren hergestellt ist, mit einem Schrumpfungsgrad von unter 2%, einer Durchstoßfestigkeit von nicht größer als 13 N und einem Weiterreißwiderstand von 3 bis 10 N, gemessen nach DIN 53363 bei einer Prüfgeschwindigkeit von 100 mm/min.

Damit sich der Schlauchbeutel verlässlich mit Öffnungen in der Größenordnung von 3 mm oder größer öffnen lässt, sollte der Quotient (Q) aus Durchstoßfestigkeit (PR) und Weiterreißwiderstand (RtT) (Q = PR : RtT) der Verbundfolie größer als 0,36 sein, insbesondere im Bereich von 0,36 bis 4,5 liegen.

Dies ist insbesondere dann von Vorteil, wenn der Schlauchbeutel zur Verpackung von Massen verwendet wird, die mit einem Handauspressgerät (Dispenser) ausgebracht werden und der Schlauchbeutel zu Beginn des Auspressvorgangs mit ein oder zwei Aufstecheinrichtungen, wie in der DE 295 01 255 U1 beschrieben, angestochen und während des Auspressvorgangs weiter unter Druck gesetzt wird, um ein Aufreißen (Öffnen) des Schlauchbeutels zu erreichen, damit die Masse aus dem Schlauchbeutel ausgebracht werden kann. Das Aufreißen ist ein Weiterreißen der Stichverletzung der Verbundfolie, die durch die Aufstecheinrichtungen verursacht wurden. Hierbei ist es von Vorteil, wenn der Weiterreißwiderstand in der für den Öffnungsprozess wesentlichen Richtung im oben genannten Bereich liegt. Bei den in der DE 295 01 255 U1 beschrieben Schlauchbeuteln wäre die wesentliche Richtung, dass der Schlauchbeutel nach dem Anstechen in Umfangsrichtung weiterreißt.

Die Erfindung wird nachfolgend anhand einer bevorzugten Ausführungsform beschrieben, die jedoch nicht in einem einschränkenden Sinn zu verstehen ist.

### BEISPIEL

Zur Herstellung der Verbundfolie wurden die folgenden Rohstoffe eingesetzt:

| | |
|---|---|
| Polyamid 6 (PA 6) | Hersteller: Ems-Chemie AG |
| | Dichte: 1,14 g/cm³ |
| | Schmelzindex: 25 cm3/10 min (275°C/5 kg) |
| Haftvermittler (HV) | Hersteller: DuPont |
| | Dichte: 0,94 g/cm³ |
| | Schmelzindex: 2,0 g/10 min (190°C/2,16 kg) |
| | Modifiziertes Ethylenacrylat |
| Polyethylen (PE) | Hersteller: The Dow Chemical Company |
| | Dichte: 0,92 g/cm³ |
| | Schmelzindex: 1,1 g/10 min (190°C/2,16 kg) |
| Ethylen-Vinylalkohol (EVOH) | Hersteller: Nippon Gohsei Europe GmbH |
| | Dichte: 1,21 g/cm³ |
| | Schmelzindex: 3,8/10 min (210°C/2,16 kg) |
| | Ethylenanteil: 29 Gew.-% |

Ein Folienschlauch aus der Verbundfolie wurde durch Blasfolien-Coextrusion aus einer Ringdüse nach dem Drei-Blasen-Verfahren mit einem Reckverhältnis in Maschinenrichtung (MD) von 2,5 und 3,0 in Querrichtung (CD) hergestellt. Der erhaltene Folienschlauch hatte einen Durchmesser von 4,9 cm.

Der so hergestellte Folienschlauch bestand aus insgesamt 9 Schichten mit der nachfolgend angegebenen Schichtfolge, von außen nach innen. Der Schrumpfungsgrad der Folie bei 65 °C lag unter 2%. Das Flächengewicht lag bei 65,5 g/cm².

| | | |
|---|---|---|
| 1.Schicht: | PA-6 | 12 µm |
| 2.Schicht: | HV | 2 µm |
| 3.Schicht: | PE | 5 µm |
| 4.Schicht: | HV | 2 µm |
| 5.Schicht: | PA 6 | 6 µm |
| 6.Schicht: | EVOH | 5 µm |
| 7.Schicht: | PA 6 | 6 µm |
| 8.Schicht: | HV | 2 µm |
| 9.Schicht: | PE | 25 µm |

An einem Probenkörper der Mehrschichtkörper wurden die in der nachfolgenden Tabelle angegebenen Werte für die Zugfestigkeit, die Bruchdehnung, die Durchstoßfestigkeit und den Weiterreißwiderstand ermittelt. Die Bestimmung der Zugfestigkeit und der Bruchdehnung erfolgte nach DIN EN ISO 527-3 mit einer Prüfgeschwindigkeit von 100 mm/min an Prüfkörpern von 15 mm Breite.

Die Durchstoßfestigkeit wurde nach DIN 53373 im Normklima 23 °C bei 50 % relativer Feuchte mit einer Prüfgeschwindigkeit von 100 mm/min ermittelt.

Die Messung des Weiterreißwiderstands erfolgte nach DIN 53363 mit einer Prüfgeschwindigkeit von 100 mm/min.

Die Abkürzung "MD" bezeichnet die Laufrichtung der Folie in der Verarbeitung (Maschinenrichtung) und die Abkürzung "CD" die Richtung quer zur Maschinenrichtung.

**Tabelle: Physikalische Eigenschaften der Verbundfolie**

| | |
|---|---|
| Zugfestigkeit MD [N/15 mm] | 75,95 |
| Zugfestigkeit CD [N/15 mm] | 77,09 |
| Bruchdehnung MD [N/15 mm] | 116,3 |
| Bruchdehnung CD [N/15 mm] | 103,7 |
| Durchstoßfestigkeit [N] | (11,83) |
| Weiterreißwiderstand Fₘₐₓ CD [N] | 4,23 (Dicke: 65 µm) |

Aus dem so erhaltenen Folienschlauch können direkt Schlauchbeutel durch Zuschneiden und Clippen der Schlauchabschnitte an den freien Enden gefertigt werden.

Die so hergestellten Schlauchbeutel weisen gute Barriereeigenschaften gegenüber organischen Aminen auf und lassen sich deshalb erfindungsgemäß als Verpackung für aminhaltige Reaktivharze und/oder Härterkomponenten verwenden. Gleichzeitig besitzen die Schlauchbeutel auch die für diese Anwendung erforderlichen mechanischen Eigenschaften wie eine hinreichende Durchstoßfestigkeit in Kombination mit einem geringen Weiterreißwiderstand.

## Patentansprüche

1. Verwendung einer kleberfreien Verbundfolie zur Verpackung einer aminhaltigen Masse, wobei die Verbundfolie wenigstens eine Lage aus Polyamid 6 aufweist, und die im Drei-Blasen-Verfahren hergestellt ist.

2. Verwendung nach Anspruch 1, **dadurch gekennzeichnet, dass** die aminhaltige Masse aus der Gruppe der Klebstoffe, Dichtstoffe und Kunstmörtel, vorzugsweise Injektionsmörtel zur chemischen Befestigung von Verankerungsmitteln in Bohrlöchern, ausgewählt ist.

3. Verwendung nach Anspruch 1 oder 2, **dadurch gekennzeichnet, dass** die aminhaltige Masse ein Amin aufweist, das aus der Gruppe der Härter und Beschleuniger für Reaktivharze auf der Grundlage von Epoxiden, Vinylverbindungen oder Isocyanaten ausgewählt ist.

4. Verwendung nach einem der Ansprüche 1 bis 3, **dadurch gekennzeichnet, dass** die aminhaltige Masse wenigstens ein aus der aus Diethylentriamin, Propylendiamin, 1,3-Diaminocyclohexan, Isophorondiamin, m-Xylylendiamin, tertiärem N,N-substituierten Anilin, tertiärem N,N-substituierten Toluidin und deren alkoxylierten Derivaten sowie Mischungen davon bestehenden Gruppe ausgewähltes Amin enthält.

5. Verwendung nach einem der vorhergehenden Ansprüche, **dadurch gekennzeichnet, dass** die Verbundfolie eine Kernschicht aufweist, die aus einer Lage aus Ethylen-Vinylalkohol-Copolymer (EVOH) gebildet ist, die beidseitig jeweils von einer Lage aus Polyamid 6 (PA 6) umgeben ist.

6. Verwendung nach Anspruch 5, **dadurch gekennzeichnet, dass** die Dicke der Kernschicht von 10 bis 20 µm, bevorzugt 15 bis 18 µm, beträgt.

7. Verwendung nach Anspruch 5 oder 6, **dadurch gekennzeichnet, dass** die Lage aus EVOH eine Dicke von etwa 4 bis 8 µm aufweist, bevorzugt 5 bis 6 µm.

8. Verwendung nach einem der Ansprüche 5 bis 7, **dadurch gekennzeichnet, dass** die Lagen aus PA 6 in der Kernschicht jeweils etwa 3 bis 6 µm dick sind, vorzugweise 5 bis 6 µm.

9. Verwendung nach einem der Ansprüche 5 bis 8, **dadurch gekennzeichnet, dass** die Kernschicht beidseitig jeweils von einer weiteren Lage aus einem Polyolefin, vorzugweise Polyethylen, umgeben ist.

10. Verwendung nach Anspruch 9, **dadurch gekennzeichnet, dass** die Kernschicht und die Polyolefinlagen durch eine Haftvermittlerlage miteinander verbunden sind.

11. Verwendung nach einem der Ansprüche 9 oder 10, **dadurch gekennzeichnet, dass** eine der Polyolefinlagen die Außenschicht des Schlauchbeutels bildet und eine Dicke von 20 bis 30 µm, bevorzugt 20 bis 25 µm, aufweist.

12. Verwendung nach einem der Ansprüche 9 bis 11, **dadurch gekennzeichnet, dass** eine der Polyolefinlagen eine innere Schicht bildet, die der aminhaltigen Masse zugewandt ist und eine Dicke von 4 bis 8 µm, vorzugweise 5 bis 6 µm aufweist.

13. Verwendung nach Anspruch 12, **dadurch gekennzeichnet, dass** auf die innere Schicht aus Polyolefin eine weitere Schicht aus Polyamid 6 aufgebracht, insbesondere aufextrudiert ist.

14. Verwendung nach Anspruch 13, **dadurch gekennzeichnet, dass** die weitere Lage aus Polyamid 6 eine Dicke in einem Bereich von 10 bis 20 µm, vorzugsweise 10 bis 15 µm, aufweist.

15. Verwendung nach einem der vorhergehenden Ansprüche, **dadurch gekennzeichnet, dass** die Verbundfolie mit einer Metallbeschichtung oder einer keramischen Beschichtung, vorzugsweise aus Siliciumoxid SiOₓ oder Aluminiumoxid AlOₓ, versehen ist.

16. Verwendung nach einem der vorhergehenden Ansprüche, **dadurch gekennzeichnet, dass** die Verbundfolie einen Schrumpfungsgrad von unter 2 % aufweist.

17. Verwendung nach einem der vorhergehenden Ansprüche, **dadurch gekennzeichnet, dass** die Verbundfolie einen Weiterreißwiderstand von 3 bis 10 N, bevorzugt 3 bis 8 N, gemessen nach DIN 53363 mit einer Prüfgeschwindigkeit von 100 mm/min, aufweist.

18. Verwendung nach einem der vorhergehenden Ansprüche, **dadurch gekennzeichnet, dass** die Verbundfolie eine Durchstoßfestigkeit bis 13 N aufweist, gemessen nach gemäß DIN EN 14477 mit einer Prüfgeschwindigkeit von 100 mm/min.

19. Verwendung nach Anspruch 17 und 18, **dadurch gekennzeichnet, dass** der Quotient aus Durchstoßfestigkeit und Weiterreißwiderstand größer als 0,36 ist, insbesondere im Bereich zwischen 0,36 und 4,5 liegt.

20. Verwendung nach einem der vorhergehenden Ansprüche, **dadurch gekennzeichnet, dass** das Drei-Blasen-Verfahren mit einem Reckverhältnis von 2,5 in Maschinenrichtung und 3,0 in Querrichtung durchgeführt wird.

21. Schlauchbeutel aus einer Verbundfolie zur Verpackung von reaktiven Massen aus der Gruppe der Klebstoffe, Dichtstoffe und Kunstmörtel, erhältlich durch Blasfolienextrusion nach dem Drei-Blasen-Verfahren, **gekennzeichnet durch** einen Schrumpfungsgrad von unter 2% und einem Weiterreißwiderstand von zwischen 3 und 10 N, gemessen nach DIN 53363 mit einer Prüfgeschwindigkeit von 100 mm/min.

22. Schlauchbeutel nach Anspruch 21, **dadurch gekennzeichnet, dass** der Quotient aus Durchstoßfestigkeit und Weiterreißwiderstand in Umfangsrichtung des Schlauchbeutels größer als 0,36 ist, insbesondere 0,36 bis 4,5.
